(19) Europäisches Patentamt
European Patent Office
Office européen des brevets

(11) EP 0 727 447 B1

(12) EUROPÄISCHE PATENTSCHRIFT

(45) Veröffentlichungstag und Bekanntmachung des Hinweises auf die Patenterteilung:
**13.05.1998 Patentblatt 1998/20**

(51) Int Cl.[6]: **C08F 36/04**, C08F 4/52, C08F 4/02

(21) Anmeldenummer: **96101593.0**

(22) Anmeldetag: **05.02.1996**

# (54) Neue Trägerkatalysatoren, Verfahren zu deren Herstellung sowie deren Verwendung zur Polymerisation konjugierter Diene in der Gasphase

New supported catalysts, their preparation and their use for the gas phase polymerisation of conjugated dienes

Nouveaux catalyseurs sur support, leur préparation et leur utilisation pour la polymérisation en phase gazeuse de diènes conjugués

(84) Benannte Vertragsstaaten:
**DE FR GB IT**

(30) Priorität: **17.02.1995 DE 19505355**

(43) Veröffentlichungstag der Anmeldung:
**21.08.1996 Patentblatt 1996/34**

(73) Patentinhaber: **BAYER AG**
**51368 Leverkusen (DE)**

(72) Erfinder:
- **Buysch, Hans-Josef, Dr.**
  **D-47809 Krefeld (DE)**
- **Mendoza-Frohn, Christine, Dr.**
  **D-40699 Erkrath (DE)**
- **Notheis, Ulrich, Dr.**
  **D-41539 Dormagen (DE)**
- **Sylvester, Gerd, Dr.**
  **D-51375 Leverkusen (DE)**

(56) Entgegenhaltungen:
**EP-A- 0 011 184** **EP-A- 0 647 657**

- **CHEMICAL ABSTRACTS, vol. 85, no. 6, 9.August 1976 Columbus, Ohio, US; abstract no. 33717, XP002004971 & SU-A-512 792 (A.A.BAULIN ET AL.) 5.Mai 1975**

EP 0 727 447 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft neue Trägerkatalysatoren, deren Herstellung sowie deren Verwendung zur Polymerisation konjugierter Diene, insbesondere Butadien, in der Gasphase.

Polybutadien mit einem hohen Anteil an cis-1,4-Einheiten wird seit längerer Zeit in großtechnischem Maßstab produziert und für die Herstellung von Reifen und anderen Gummiartikeln verwendet. Die Polymerisation wird hierbei in flüssiger Phase unter Verwendung der verschiedensten Katalysatorsysteme durchgeführt. Lange Zeit wurden dabei Katalysatoren eingesetzt, die auf einem Übergangsmetall, wie Titan, Kobalt oder Nickel, beruhen. In neuerer Zeit wurden auch Systeme auf der Basis von Seltenen Erden (Ordnungszahlen 57 (Lanthan) bis 71 (Lutetium)) entwickelt.

Ein besonders vorteilhaftes Katalysatorsystem zur Herstellung von Polybutadien mit einem hohen Anteil an cis-1,4-Einheiten wird in EP-A-11 184 beschrieben. Das dort beschriebene und zur Lösungspolymerisation von Butadien verwendete Katalysatorsystem besteht z.B. aus einem Carboxylat der Seltenen Erden, einem Aluminiumtrialkyl und/oder Alkylaluminiumhydrid und einer weiteren Lewis-Säure.

In der deutschen Anmeldung P 43 34 045.8 wird die Polymerisation konjugierter Diene in der Gasphase mit Katalysatoren bestehend aus einer Verbindung der Seltenen Erden, einem Aluminiumtrialkyl, einem Dialkylaluminiumhydrid und/oder einem Alumoxan, einer weiteren Lewis-Säure sowie einem inerten, teilchenförmigen, anorganischen Träger mit einer spezifischen Oberfläche größer als 10 $m^2/g$ (BET) und einem Porenvolumen von 0,3 bis 15 ml/g beschrieben. Das in der deutschen Anmeldung beschriebene Katalysatorsystem ermöglicht erstmals die Synthese von Polybutadien in der Gasphase, wobei Polymere mit hohem cis-Anteil und hohen Molgewichten erhalten werden. Wünschenswert wären jedoch noch verbesserte Aktivitäten solcher geträgerter Katalysatoren.

Überraschenderweise wurde nun gefunden, daß bei der Verwendung von Aktivkohlen als Trägermaterialien deutlich aktivere Katalysatoren für die Gasphasenpolymerisation von konjugierten Dienen erhalten werden.

Dies war nicht zu erwarten, da dem Fachmann die große Empfindlichkeit oben erwähnter Polymerisationskatalysatoren bekannt ist und Aktivkohlen in diesem Sinne höchst störende Gruppen, wie Carbonyl-, Carboxyl-, Phenol-, Lacton-, Chinon- und Ethergruppen an der Oberfläche tragen (s. Ullmann's Encyclopedia of Industrial Chemistry, Fifth Completely Revised Edition, VCH, Weinheim 1986, Vo. A5, S. 125), die mit dem Polymerisationskatalysator reagieren und so zu einer Desaktivierung des Katalysators führen können.

Gegenstand der vorliegenden Erfindung sind daher Trägerkatalysatoren bestehend aus

A)

einem Alkoholat der Seltenen Erden (I),
einem Carboxylat der Seltenen Erden (II),
einer Komplexverbindung der Seltenen Erden mit Dicarbonylverbindungen (III)und/oder einer Additionsverbindung der Halogenide der Seltenen Erden mit einer Sauerstoff- oder Stickstoff-Donatorverbindung (IV) folgender Formeln:

$$(R^1O)_3M \qquad (I),$$

$$(R^1\text{-}CO_2)_3M \qquad (II),$$

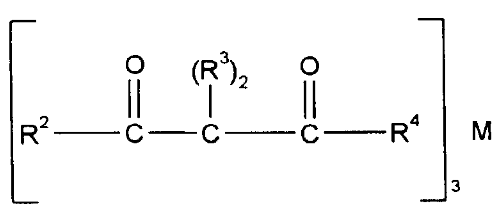

(III)

und

$$MX_3 \cdot y \text{ Donator} \qquad (IV),$$

B) einem Aluminiumtrialkyl, einem Dialkylaluminiumhydrid und/oder einem Alumoxan der Formeln (V) bis (VIII)

$$AlR^5{}_3 \qquad (V),$$

$$HAlR^5{}_2 \qquad (VI),$$

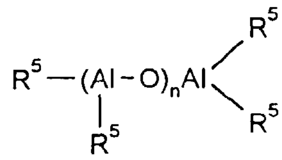

(VII)

und

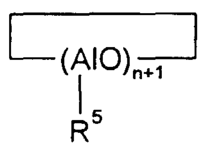

(VIII),

wobei in den Formeln

| | |
|---|---|
| M | ein dreiwertiges Element der Seltenen Erden mit den Ordnungszahlen 57 bis 71 bedeutet, |
| $R^1$, $R^2$, $R^5$ | gleich oder verschieden sind und geradkettige oder verzweigte Alkylreste mit 1 bis 20 C-Atomen, Cycloalkylreste mit 3 bis 20 C-Atomen oder Arylreste mit 6 bis 20 C-Atomen bedeuten, |
| $R^3$ | die Bedeutung von $R^1$, $R^2$ und $R^5$ besitzt oder Wasserstoff ist, |
| $R^4$ | die Bedeutung von $R^1$, $R^2$ und $R^5$ besitzt oder für $OR^1$ oder $NR^1{}_2$ steht oder |
| $R^2$, $R^3$ und $R^4$ | in der Formel (III) Teil eines aliphatischen oder aromatischen Ringsystems mit 3 bis 20 C-Atomen sind, |
| X | für Chlor, Brom oder Iod steht, |
| y | 1 bis 6 bedeutet, |
| n | 1 bis 50 bedeutet, |

C) einer weiteren Lewis-Säure und

D) einer Aktivkohle mit einer spezifischen Oberfläche nach BET von mehr als 100 $m^2/g$, bevorzugt 300 bis 3000 $m^2/g$, besonders bevorzugt 600 bis 2000 $m^2/g$ und einer Teilchengröße von 0,1 bis 400 µm, bevorzugt 1 bis 200 µm, besonders bevorzugt 10 - 100 µm, sowie einem Hg-Porenvolumen von 0,3 bis 3 ml/g, bevorzugt 0,8 bis 2,2 ml/g und einem Aschegehalt von 0 bis 20 %, bevorzugt 0 bis 10 %.

In der Komponente A bedeutet M ein dreiwertiges Element der Seltenen Erden mit den im Periodensystem gekennzeichneten Ordnungszahlen 57 bis 71. Bevorzugt werden solche Verbindungen, in denen M Lanthan, Cer, Praseodym oder Neodym oder ein Gemisch von Elementen der Seltenen Erden, welches mindestens eines der Elemente Lanthan, Cer, Praseodym oder Neodym zu wenigstens 10 Gew.-% enthält, bedeutet. Ganz besonders bevorzugt sind

Verbindungen, in denen M Lanthan oder Neodym bzw. ein Gemisch von Seltenen Erden, welches Lanthan oder Neodym zu mindestens 30 Gew.-% enthält, bedeutet.

Als Reste $R^1$, $R^2$ und $R^3$ in den Formeln (I) bis (IV) sind insbesondere geradkettige oder verzweigte Alkylreste mit 1 bis 20 Kohlenstoffatomen, bevorzugt 1 bis 15 Kohlenstoffatomen, zu nennen, wie Methyl, Ethyl, n-Propyl, n-Butyl, n-Pentyl, Isopropyl, Isobutyl, tert.-Butyl, 2-Ethylhexyl, neo-Pentyl, neo-Octyl, neo-Decyl, neo-Dodecyl. Des weiteren sind insbesondere zu nennen: Cycloalkylreste mit 3 bis 10 Kohlenstoffatomen, wie Cyclopropyl, Cyclobutyl, Cyclopentyl, Cyclohexyl, Cycloheptyl, Cyclooctyl, alkylsubstituierte Cycloalkylreste, wie 2-Methylcyclohexyl, 4,4-Dimethylcyclohexyl. Außerdem sind besonders zu nennen: Arylreste mit 6 bis 12 Kohlenstoffatomen, wie Phenyl, Tolyl, Benzyl, Naphtyl. Außerdem kann $R^3$ Wasserstoff sein und die Reste $R^2$, $R^3$ und $R^4$ können Teil eines aliphatischen oder aromatischen Ringsystems mit 3 bis 10, bevorzugt 4 bis 8 Kohlenstoffatomen sein. Zusätzlich kann der Rest $R^4$ für $OR^1$ oder $NR^1{}_2$-Gruppierungen stehen mit der für $R^1$ genannten Bedeutung.

Als Alkoholate der Seltenen Erden (I) der Komponente A werden z.B. genannt: Neodym(III)-n-propanolat, Neodym (III)-n-butanolat, Neodym(III)-n-decanolat, Neodym(III)-iso-propanolat, Neodym(III)-2-ethyl-hexanolat, Praseodym (III)-n-propanolat, Praseodym(III)-n-butanolat, Praseodym(III)-n-decanolat, Praseodym(III)-iso-propanolat, Praseodym(III)-2-ethyl-hexanolat, Lanthan(III)-n-propanolat, Lanthan(III)-n-butanolat, Lanthan(III)-n-decanolat, Lanthan(III)-iso-propanolat, Lanthan(III)-2-ethyl-hexanolat, bevorzugt Neodym(III)-n-butanolat, Neodym(III)-n-decanolat, Neodym (III)-2-ethyl-hexanolat.

Als Carboxylate (II) der Komponente A sind geeignet: Lanthan(III)-propionat, Lanthan(III)-diethylacetat, Lanthan (III)-2-ethylhexanoat, Lanthan(III)-stearat, Lanthan(III)-benzoat, Lanthan(III)-cyclohexancarboxylat, Lanthan(III)-oleat, Lanthan(III)-versatat, Lanthan(III)-naphthenat, Praseodym(III)-propionat, Praseodym(III)-diethylacetat, Praseodym (III)-2-ethylhexanoat, Praseodym(III)-stearat, Praseodym(III)-benzoat, Praseodym(III)Praseodym(III)-cyclohexancarboxylat, Praseodym(III)-oleat, Praseodym(III)-versatat, Praseodym(III)-naphthenat, Neodym(III)-propionat, Neodym (III)-diethylacetat, Neodym(III)-2-ethylhexanoat, Neodym(III)-stearat, Neodym(III)-benzoat, Neodym(III)Praseodym (III)-cyclohexancarboxylat, Neodym(III)-oleat, Neodym(III)-versatat, Neodym(III)-naphthenat, bevorzugt Neodym(III)-2-ethylhexanoat, Neodym(III)-versatat, Neodym(III)-naphthenat. Besonders bevorzugt wird Neodymversatat.

Als Komplexverbindungen (III) der Komponente A seien genannt: Lanthan(III)-acetylacetonat, Praseodym(III)-acetylacetonat, Neodym(III)-acetylacetonat, bevorzugt Neodym(III)-acetylacetonat.

Als Additionsverbindungen (IV) der Komponente A mit N- oder O-Donatoren werden beispielsweise genannt: Lanthan(III)-chlorid mit Tributylphosphat, Lanthan(III)-chlorid mit Tetrahydrofuran, Lanthan(III)-chlorid mit iso-Propanol, Lanthan(III)-chlorid mit Pyridin, Lanthan(III)-chlorid mit 2-Ethylhexanol, Lanthan(III)-chlorid mit Ethanol, Praseodym (III)-chlorid mit Tributylphosphat, Praseodym(III)-chlorid mit Tetrahydrofuran, Praseodym(III)-chlorid mit iso-Propanol, Praseodym(III)-chlorid mit Pyridin, Praseodym(III)-chlorid mit 2-Ethylhexanol, Praseodym(III)-chlorid mit Ethanol, Neodym(III)-chlorid mit Tributylphosphat, Neodym(III)-chlorid mit Tetrahydrofuran, Neodym(III)-chlorid mit iso-Propanol, Neodym(III)-chlorid mit Pyridin, Neodym(III)-chlorid mit 2-Ethylhexanol, Neodym(III)-chlorid mit Ethanol, Lanthan(III)-bromid mit Tributylphosphat, Lanthan(III)-bromid mit Tetrahydrofuran, Lanthan(III)-bromid mit iso-Propanol, Lanthan (III)-bromid mit Pyridin, Lanthan(III)-bromid mit 2-Ethylhexanol, Lanthan(III)-bromid mit Ethanol, Praseodym(III)-bromid mit Tributylphosphat, Praseodym(III)-bromid mit Tetrahydrofuran, Praseodym(III)-bromid mit iso-Propanol, Praseodym (III)-bromid mit Pyridin, Praseodym(III)-bromid mit 2-Ethylhexanol, Praseodym(III)-bromid mit Ethanol, Neodym(III)-bromid mit Tributylphosphat, Neodym(III)-bromid mit Tetrahydrofuran, Neodym(III)-bromid mit iso-Propanol, Neodym (III)-bromid mit Pyridin, Neodym(III)-bromid mit 2-Ethylhexanol, Neodym(III)-bromid mit Ethanol, bevorzugt Lanthan (III)-chlorid mit Tributylphosphat, Lanthan(III)-chlorid mit Pyridin, Lanthan(III)-chlorid mit 2-Ethylhexanol, Praseodym (III)-chlorid mit Tributylphosphat, Praseodym(III)-chlorid mit 2-Ethylhexanol, Neodym(III)-chlorid mit Tributylphosphat, Neodym(III)-chlorid mit Tetrahydrofuran, Neodym(III)-chlorid mit 2-Ethylhexanol, Neodym(III)-chlorid mit Pyridin, Neodym(III)-chlorid mit 2-Ethylhexanol, Neodym(III)-chlorid mit Ethanol.

Die Verbindungen der Seltenen Erden können einzeln oder im Gemisch untereinander eingesetzt werden.

Ganz besonders bevorzugt werden Neodymversatat, Neodymoctanoat und/oder Neodymnaphthenat als Komponente A eingesetzt.

Beispiele für geeignete Aluminiumalkyle den Formeln (V) und (VI) bei der Komponente B) sind: Trimethylaluminium, Triethylaluminium, Tri-n-propylaluminium, Triisopropylaluminium, Tri-n-butylaluminium, Triisobutylaluminium, Tripentylaluminium, Trihexylaluminium, Tricyclohexylaluminium, Trioctylaluminium, Tridodecylaluminium, Diethylaluminiumhydrid, Di-n-butylaluminiumhydrid und Di-iso-butylaluminiumhydrid. Bevorzugt werden Triethylaluminium, Triisobutylaluminium und Di-iso-butylaluminiumhydrid. Besonders bevorzugt wird Diisobutylaluminiumhydrid.

Als Beispiele für die Alumoxane der Formeln (VII) und (VIII) der Komponente B werden genannt: Methylalumoxan, Ethylalumoxan und iso-Butylalumoxan, bevorzugt Methylalumoxan und iso-Butylalumoxan.

Als Komponente C werden sogenannte Lewis-Säuren eingesetzt. Beispielhaft seien die Organometallhalogenide erwähnt, in denen das Metallatom der Gruppe 3a) oder 4a) angehört, sowie Halogenide der Elemente der Gruppe 3a), 4a) und 5a) des Periodensystems, wie es im "Handbook of Chemistry and Physics", 45th Edition 1964-65 dargestellt ist. Genannt werden insbesondere: Methylaluminiumdibromid, Methylaluminiumdichlorid, Ethylaluminiumdibromid,

Ethylaluminiumdichlorid, Butylaluminiumdibromid, Butylaluminiumdichlorid, Dimethylaluminiumbromid, Dimethylaluminiumchlorid, Diethylaluminiumbromid, Diethylaluminiumchlorid, Dibutylaluminiumbromid, Dibutylaluminiumchlorid, Methylaluminiumsesquibromid, Methylaluminiumsesquichlorid, Ethylaluminiumsesquibromid, Ethylaluminiumsesquichlorid, Aluminiumtribromid, Antimontrichlorid, Antimonpentachlorid, Phoxphortrichlorid, Phosphorpentachlorid, Zinntetrachlorid.

Bevorzugt werden Diethylaluminiumchlorid, Ethylaluminiumsesquichlorid, Ethylaluminiumdichlorid, Diethylaluminiumbromid, Ethylaluminiumsesquibromid und/oder Ethylaluminiumdibromid eingesetzt.

Als Komponente C können auch die Reaktionsprodukte aus Aluminiumverbindungen, wie sie als Komponente B beschrieben werden, mit Halogenen oder Halogenverbindungen, z.B. Triethylaluminium mit Brom oder Triethylaluminium mit Butylchlorid, eingesetzt werden. In diesem Fall kann die Umsetzung getrennt durchgeführt werden, oder die für die Umsetzung benötigte Menge der Alkylaluminiumverbindung wird zu der als Komponente B benötigten Menge addiert.

Bevorzugt werden Ethylaluminiumsesquichlorid, Butylchlorid und Butylbromid eingesetzt.

Die Aktivkohlen (Komponente D) können in bekannter Weise aus kohlenstoffhaltigen Substanzen, wie Holz, Torf, Nußschalen, Obstkernen, Holzkohle, Baumwolle, Steinkohle, Rußen, Steinkohlenteer, Asphalt, Petrolkoks, Braunkohlekoks und Steinkohlekoks hergestellt werden. Die Aktivkohlen mit den zuvor genannten physikalischen Daten können bekannterweise chemisch aktiviert werden, beispielsweise mit Phosphorsäure oder Zinkchlorid (chemische Aktivierung) oder mit sauerstoffhaltigen, gasförmigen Verbindungen wie Wasserdampf und/oder Kohlendioxid (Gasaktivierung). Verfahren zur Herstellung solcher Aktivkohlen sind beispielsweise beschrieben in Ullmann's Encyclopedia of Industrial Chemistry, Fifth, Completely Revised Edition, VCH, Weinheim 1986, Vol. A5, S. 124 bis 139 ("Activated Carbon") und in Kirk-Othmer, Encyclopedia of Chemical Technology, Fourth Edition, Wiley, New York 1992, Vol. 4, S. 1015 bis 1037 ("Activated Carbon"). Darüber hinaus kann bei der Herstellung der Aktivkohlen eine Nachbehandlung der selben durchgeführt werden, beispielsweise ein Waschen mit Wasser oder Säuren, wie mit Salz- oder Salpetersäure.

Weiterhin können die Aktivkohlen vor ihrer Verwendung als Trägermaterialien einige Zeit erwärmt werden. Das kann an Luft, unter Inertgas - zum Beispiel unter Stickstoff, Argon- oder im Vakuum oder in einem Gasstrom - zum Beispiel aus einem oder mehreren der genannten Gase - erfolgen. Die minimale Dauer der Erwärmung beträgt 1 Minute. Die Obergrenze der Erwärmungsdauer ist nicht limitiert, durch die Praktikabilität der Durchführung bedingt wird sie jedoch im allgemeinen bei etwa 72 Stunden liegen. Bevorzugt werden Behandlungsdauern von 15 Minuten bis 24 Stunden. Die Temperatur bei der Behandlung beträgt 0°C bis 1000°C, bevorzugt 20°C bis 500°C.

Die als Trägermaterial verwendeten Aktivkohlen (Komponente D) können einzeln oder im Gemisch untereinander oder im Gemisch mit inerten, anorganischen Feststoffen eingesetzt werden.

Unter inert wird in diesem Fall verstanden, daß die Feststoffe weder eine reaktive Oberfläche aufweisen noch adsorbiertes Material enthalten, die die Bildung eines aktiven Katalysators hindern bzw. mit den Monomeren reagieren.

Als inerte anorganische Feststoffe eignen sich insbesondere Silicagele, Tone, Alumosilikate, Talkum, Zeolithe, Ruß, anorganische Oxide, wie Siliciumdioxid, Aluminiumoxid, Magnesiumoxid, Titandioxid, Siliciumcarbid, bevorzugt Silicagele, Zeolithe und Ruß, besonders bevorzugt Silicagel.

Die genannten inerten, anorganischen Feststoffe, die der obengenannten Spezifikation genügen und deshalb für den Einsatz geeignet sind, werden beispielsweise näher beschrieben in Ullmanns, Enzyclopädie der technischen Chemie, Band 21, S. 439 ff. (Silicagele), Band 23, S. 311 ff. (Tone), Band 14, S. 633 ff. (Ruße), Band 24, S. 575 ff. und Band 17, S. 9 ff. (Zeolithe).

Das Molverhältnis, in denen die Katalysatorkomponenten A bis D eingesetzt werden, kann in weiten Grenzen variiert werden.

Das Molverhältnis der Komponente A zu Komponente B beträgt 1:1 bis 1:1000, bevorzugt 1:3 bis 1:200, besonders bevorzugt 1:3 bis 1:100. Das Molverhältnis der Komponente A zu Komponente C beträgt 1:0,4 bis 1:15, bevorzugt 1:0,5 bis 1:8.

Auf 100 g der Komponente D werden 0,1 mMol bis 1 Mol der Komponente A, bevorzugt 1 bis 50 mMol der Komponente A eingesetzt.

Es ist auch möglich, den Katalysatorkomponenten A bis D noch eine weitere Komponente E zuzusetzen. Diese Komponente E ist ein konjugiertes Dien, das das gleiche Dien sein kann, das später mit dem Katalysator polymerisiert werden soll. Bevorzugt werden verwendet Butadien und Isopren.

Wird die Komponente E dem Katalysator zugesetzt, so beträgt die Menge an E bevorzugt 1-1 000 Mol, bezogen auf 1 Mol der Komponente A, besonders bevorzugt 1-100 Mol, bezogen auf 1 Mol der Komponente A. Ganz besonders bevorzugt werden 1-50 Mol, bezogen auf 1 Mol der Komponente A, an E eingesetzt.

Ein weiterer Gegenstand der Erfindung ist die Herstellung des zuvor beschriebenen Katalysators. Dieser wird hergestellt, indem man die Komponenten A bis E in einem inerten Lösungs- und/oder Verdünnungsmittel mischt und das Lösungs- bzw. Verdünnungsmittel nach der gewünschten Zeit destillativ, gegebenenfalls im Vakuum, abtrennt. Als inerte Lösungs- und/oder Verdünnungsmittel können aliphatische, cycloaliphatische und/oder aromatische Lösungsmittel, wie Pentan, Hexan, Heptan, Cyclohexan, Benzol und/oder Toluol eingesetzt werden. Die Reihenfolge, in der die Komponenten A bis E und das inerte Lösungsmittel zum Reaktionsansatz gegeben werden, ist beliebig, wenn sie auch einen Einfluß auf die Eigenschaften des resultierenden Katalysators ausüben. Man kann z.B. die Komponente D in dem inerten Lösungsmittel aufschlämmen, anschließend die Komponente B dazugeben, dann A, danach E und schließlich C zugeben. Es ist auch möglich, zwischen den einzelnen Komponenten das inerte Lösungs- bzw. Verdünnungsmittel abzudestillieren, bevor weitere Komponenten, gegebenenfalls in einem Lösungsmittel, zugegeben werden. Die einzelnen Komponenten können auch aufgeteilt werden und die Teile zu verschiedenen Zeiten zum Katalysatoransatz gegeben werden. Eine bevorzugte Ausführungsform besteht beispielsweise darin, die Komponente D vor der Zugabe zum Katalysatoransatz mit einer Teilmenge der Komponente B in einem inerten Lösungs- oder Verdünnungsmittel zu behandeln, dieses Lösungs- und/oder Verdünnungsmittel abzudestillieren und den so erhaltenen Feststoff zu einer Mischung der Komponenten A, C, E und der Restmenge der Komponente B zuzugeben. Weitere mögliche Reihenfolgen sind (V = Verdünnungs- bzw. Lösungsmittel): 1. V, 2. A, 3. B, 4. C, 5. (D + B); 1. (B + D), 2. V, 3. C, 4. B, 5. E, 6. A oder 1. (B + D), 2. V, 3. E, 4. B, 5. C, 6. A; 1. V, 2. D, 3. B, 4. C, 5. A.

Die Menge des eingesetzten inerten Lösungs- und/oder Verdünnungsmittels kann in weiten Grenzen variiert werden. Aus ökonomischen Gründen wird man die Menge möglichst gering halten. Die minimale Menge richtet sich nach der Menge und der Löslichkeit der einzelnen Komponenten sowie dem Porenvolumen der Komponente D. Bevorzugt wird eine Menge von 10 bis 2 000 Teilen des Lösungs- und/oder Verdünnungsmittels, bezogen auf 100 Teile der Komponente D, eingesetzt.

Die Herstellung des Katalysators kann in einem weiten Temperaturbereich erfolgen. Im allgemeinen liegt die Temperatur zwischen Schmelz- und Siedepunkt der Komponenten A bis C bzw. des inerten Verdünnungs- und/oder Lösungsmittels. Üblicherweise wird bei Temperaturen von -20 bis 80°C gearbeitet.

Die Erfindung betrifft auch ein Verfahren zur Polymerisation von gasförmigen konjugierten Dienen, z.B. von 1.3-Butadien, Isopren, Pentadien oder Dimethylbutadien.

Die Polymerisation erfolgt, indem man das gasförmige konjugierte Dien mit dem beschriebenen Katalysator in Berührung bringt. Dem gasförmigen Monomeren können weitere Gase zugemischt werden, die entweder der Verdünnung bzw. der Wärmeabführung oder der Regelung des Molekulargewichtes dienen. Die Polymerisation kann bei Drükken von 1 mbar bis 50 bar, bevorzugt 1 bis 20 bar, durchgeführt werden.

Im allgemeinen wird die Polymerisation bei Temperaturen von -20 bis 250°C, bevorzugt bei 0 bis 200°C, besonders bevorzugt bei 20 bis 160°C, durchgeführt.

Die Polymerisation kann in jeder für eine Gasphasenpolymerisation geeigneten Apparatur bewerkstelligt werden. So kann z.B. ein Rührreaktor, ein Drehreaktor oder ein Fließbettreaktor oder eine Kombination dieser Reaktortypen verwendet werden. Um ein Verkleben zu vermeiden, kann der Zusatz von bekannten Pudermitteln hilfreich sein. Als Pudermittel können alle inerten, feinkörnigen Feststoffe verwendet werden, insbesondere auch die als mögliche Zusätze zur Komponente D beschriebenen inerten, anorganischen Feststoffe.

Die erhaltenen Polymerisate weisen einen Gehalt an cis-1,4-Doppelbindungen von etwa 60 bis 99 % auf. Das Molgewicht kann durch die Zusammensetzung des Katalysators und durch die Variation der Polymerisationsbedingungen verändert werden. Üblich sind Molgewichte von $10^3$ bis $10^6$ gemessen mit GPC (Gel-Permeations-Chromatographie).

Die Mooneyviskosität, ML (1 + 4', 100°C), liegt üblicherweise im Bereich zwischen 30 und 180 ME. Durch die Polymerisation in der Gasphase können auch sehr hochmolekulare Polymere hergestellt werden, die durch Lösungspolymerisation wegen der hohen Viskosität und der Möglichkeit von Übertragungsreaktionen durch das verwendete Lösungsmittel nur unter extrem hohem Aufwand zugänglich sind.

Die erhaltenen Polymerisate können auf übliche Weise compoundiert und vulkanisiert werden.

In einer gängigen Ausführungsform wird bei der Polymerisation von 1.3-Butadien wie folgt verfahren:

Der aus den Komponenten A bis D und gegebenenfalls E bestehende Katalysator wird in eine Apparatur überführt, die geeignet ist, den pulverförmigen Katalysator in Bewegung zu halten. Das kann z.B. durch Rühren, Drehen und/oder einen Gasstrom erfolgen. Das zunächst im Gasraum befindliche inerte Gas, z.B. Stickstoff, wird durch das gasförmige Monomere ersetzt. Dabei setzt eine sofortige Polymerisation ein und die Temperatur steigt an. Das Monomere wird, gegebenenfalls verdünnt, mit einem Inertgas mit einer geeigneten Geschwindigkeit dem Reaktor zugeführt, daß die gewünschte Reaktionstemperatur nicht überschritten wird. Die Reaktionstemperatur kann auch auf übliche Weise durch Heizen bzw. Kühlen eingestellt werden. Die Polymerisation wird durch Abstellen der Monomerzufuhr beendet. Das Polymere kann in der bekannten Weise weiterbehandelt werden, indem man den Katalysator deaktiviert und das Polymere mit bekannten Alterungsschutzmitteln versetzt.

Die nachfolgenden Beispiele sollen die vorliegend beschriebene Erfindung verdeutlichen.

Die angegebenen Stoffcharakteristiken und Eigenschaften wurden wie folgt bestimmt:

| | |
|---|---|
| BET-Oberfläche: | wird üblicherweise nach S. Brunau, P.H. Emmet, J. Teller; J. Am. Chem. Soc. 60 (2), (1938) 309 bestimmt. |

| | |
|---|---|
| Partikelgrößen | mit einer Methode, die auf der Diffraktion von monochromatischem Laserlicht beruht mit einem Gerät MALVERN Master Sizer MS 20. |
| Mooney-Viskositäten: | nach DIN 53 523, ML (1 + 4', 100°C) |
| Hg-Porenvolumina | werden mittels Hg-Penetration in einem Porosimeter der Fa. Carlo Erba "Porosimeter 2000" bis zu einem Druck von 2000 g/cm$^2$ bestimmt. |

Molmassen der Polymere werden mittels Gelpermeationschromatographie bestimmt.

## Beispiele

Alle Arbeiten wurden mit getrockneten und deoxigenierten Lösungsmitteln mittels Schlenk-Technik oder in einer Glove-Box in einer Atmosphäre aus trockenem Stickstoff ausgeführt. 1,3-Butadien (Fa. GHC, Hanau) wurde über Gas-Clean Aktivkohle- und Sauerstoff-Filter (Fa. Chrompack, Frankfurt) nachgereinigt.

Ethylaluminiumsesquichlorid (EASC) und Diisobutylaluminiumhydrid (DIBAH) (Fa. WITCO-GmbH, Bergkamen) wurden als 50 %ige Lösungen in Hexan eingesetzt.

Neodymversatat (NDV) wurde als 0,3 m Lösung in Hexan verwendet.

Vulkasil S ist ein Kieselgel der Bayer AG mit einer Oberfläche nach BET von 230 m$^2$/g. Das Hg-Porenvolumen beträgt 2,83 mL/g.

Die Aktivkohlen stammen von der Fa. ELF-ATOCHEM, Düsseldorf: Acticarbone L3S ist eine pulverförmige, dampfaktivierte Kiefernholzkohle, die mit Salpetersäure gewaschen wurde. Ihre BET-Oberfläche beträgt 1 150 m$^2$/g, das Hg-Porenvolumen 1,63 mL/g und der Aschegehalt < 3 %.

Acticarbone 35 ist eine pulverförmige, dampfaktivierte Kiefernholzkohle mit einer BET-Oberfläche von 1 150 m$^2$/g, einem Hg-Porenvolumen von 1,66 mL/g und einem Aschegehalt < 6 % Acticarbone CXA ist eine pulverförmige, chemisch aktivierte Kiefernholzkohle ($H_3PO_4$) mit einer BET-Oberfläche von 1 100 m$^2$/g, einem Hg-Porenvolumen von 1,75 mL/g und einem Aschegehalt <6,5 %.

Die Katalysatoraktivität A ist definiert als:

$$A = [\text{kg gebildetes Polymer}] / [(\text{Stunde}) \times (\text{Mol Neodym})]$$

## Vergleichsbeispiel A:

### Vorbehandlung

10 g für 24 h bei 250°C getrocknetes Vulkasil S wurde in 50 mL Hexan suspendiert. Dazu wurden 0,08 mL einer 50 %igen Lösung von DIBAH in Hexan (0,2 mMol) gegeben, die Suspension fünf Minuten gerührt, anschließend das Lösungsmittel im Vakuum abdestilliert und der Rückstand im Vakuum getrocknet.

### Herstellen des Katalysators

13,0 mL einer 50 %igen Lösung von DIBAH in Hexan (33,2 mMol), 0,95 mL einer 50 %igen Lösung von EASC in Hexan (1,66 mMol), 2,5 mL einer 20 %igen Lösung von Butadien in Hexan (0,5 g) und 5,55 mL einer 0,3 m Lösung von NDV in Hexan (1,66 mMol) wurden mit 120 mL Hexan vermischt und die Mischung unter kräftigem Rühren schnell auf den vorbehandelten Träger gegeben. Es wurde weitere fünf Minuten gerührt, anschließend das Hexan im Vakuum abdestilliert und der Rückstand im Vakuum getrocknet, bis ein frei fließendes Pulver entstand.

## Vergleichsbeispiel B:

27,1 mL einer 50 %igen Lösung von DIBAH in Hexan (68,3 mMol), 1,98 mL einer 50 %igen Lösung von EASC in Hexan (3,46 mMol), 0,67 mL einer 35 %igen Lösung von Butadien in Hexan (0,23 g) und 11,7 mL einer 0,3 m Lösung von NDV in Hexan (3,46 mMol) wurden mit 120 mL Hexan vermischt und die Mischung unter kräftigem Rühren schnell auf 20,9 g bei 250°C getrocknetes Vulkasil S gegeben. Es wurde weitere fünf Minuten gerührt, anschließend das Hexan im Vakuum abdestilliert und der Rückstand im Vakuum getrocknet, bis ein frei fließendes Pulver entstand.

**Vergleichsbeispiel C:**

26,1 mL einer 50 %igen Lösung von DIBAH in Hexan (65,8 mMol) , 1,91 mL einer 50 %igen Lösung von EASC in Hexan (3,33 mMol), 2,9 mL einer 35 %igen Lösung von Butadien in Hexan (1,0 g) und 11,3 mL einer 0,3 m Lösung von NDV in Hexan (3,33 mMol) wurden mit 100 mL Hexan vermischt und die Mischung unter kräftigem Rühren schnell auf 20,08 g bei 250°C getrocknetes Vulkasil S gegeben. Es wurde weitere fünf Minuten gerührt, anschließend das Hexan im Vakuum abdestilliert und der Rückstand im Vakuum getrocknet bis ein frei fließendes Pulver entstand.

**Beispiel 1**

**Vorbehandlung des Trägers**

20,3 g Aktivkohle CECA CXA wurden im Hochvakuum 3 h auf 150°C erwärmt und anschließend in 132 mL Hexan suspendiert. Dazu wurden 0,162 mL einer 50 %igen Lösung von DIBAH in Hexan (0,406 mMol) gegeben, die Suspension fünf Minuten gerührt, anschließend das Lösungsmittel im Vakuum abdestilliert und der Rückstand im Vakuum getrocknet.

**Herstellen des Katalysators**

26,3 mL einer 50 %igen Lösung von DIBAH in Hexan (67,4 mMol), 1,93 mL einer 50 %igen Lösung von EASC in Hexan (3,37 mMol), 5,0 mL einer 20 %igen Lösung von Butadien in Hexan (1,0 g) und 11,3 mL einer 0,3 m Lösung von NDV in Hexan (3,37 mMol) wurden mit 100 mL Hexan vermischt und die Mischung schnell unter kräftigem Rühren auf den vorbehandelten Träger gegeben. Es wurde weitere fünf Minuten gerührt, anschließend das Hexan im Vakuum abdestilliert und der Rückstand im Vakuum getrocknet, bis ein frei fließendes Pulver entstand.

**Beispiele 2 und 3**

Die Katalysatoren wurden wie in Beispiel 1 hergestellt, mit dem Unterschied, daß als Träger die Aktivkohlen CECA L3S bzw. CECA 3 S verwendet wurden.

| Beispiel Nr. | 2 | 3 |
|---|---|---|
| Aktivkohle | CECA L3S | CECA 3S |
| Menge Aktivkohle | 22,8 g | 20,9 g |
| Hexan | 112 mL | 92 mL |
| DIBAH | 0,182 mL 50 % Lsg / 0,46 mMol | 0,170 mL 50 % Lsg / 0,42 mMol |
| DIBAH | 29,5 mL 50 % Lsg / 75,7 mMol | 27,1 mL 50 % Lsg / 69,4 mMol |
| EASC | 2,17 mL 50 % Lsg / 3,78 mMol | 2,0 mL 50 % Lsg / 3,47 mMol |
| Butadien | 5,7 mL 20 % Lsg / 1,14 g | 5,2 mL 20 % Lsg / 1,05 g |
| NDV | 12,65 mL 0,3 m Lsg / 3,78 mMol | 11,6 mL 0,3 m Lsg / 3,42 mMol |
| Hexan | 120 mL | 100 mL |

**Beispiel 4**

28,2 mL einer 50 %igen Lösung von DIBAH in Hexan (71,0 mMol), 2,06 mL einer 50 %igen Lösung von EASC in Hexan (3,59 mMol), 0,70 mL einer 35 %igen Lösung von Butadien in Hexan (0,25 g) und 12,2 mL einer 0,3 m Lösung von NDV in Hexan (3,59 mMol) wurden mit 100 mL Hexan vermischt und die Mischung unter kräftigem Rühren schnell auf 21,7 g Aktivkohle CECA L3S, die 4 h bei 150°C im Hochvakuum getrocknet worden war, gegeben. Es wurde weitere fünf Minuten gerührt, anschließend das Hexan im Vakuum abdestilliert und der Rückstand im Vakuum getrocknet, bis ein frei fließendes Pulver entstand.

**Beispiel 5**

26,3 mL einer 50 %igen Lösung von DIBAH in Hexan (66,2 mMol), 1,92 mL einer 50 %igen Lösung von EASC in

Hexan (3,35 mMol), 2,9 mL einer 35 %igen Lösung von Butadien in Hexan (1,08 g) und 12,2 mL einer 0,3 m Lösung von NDV in Hexan (3,59 mMol) wurden mit 100 mL Hexan vermischt und die Mischung unter kräftigem Rühren schnell auf 20,20 g Aktivkohle CECA L3S, die 4 h bei 150°C im Hochvakuum getrocknet worden war, gegeben. Es wurde weitere fünf Minuten gerührt, anschließend das Hexan im Vakuum abdestilliert und der Rückstand im Vakuum getrocknet, bis ein frei fließendes Pulver entstand.

**Beispiele 6 bis 13**

Die Polymerisationen wurden in Glasreaktoren (Innendurchmesser 10 mm, Länge 200 mm) durchgeführt, in die in einer Höhe von 100 mm eine G2-Fritte eingeschmolzen war: Auf die Fritte wurden in einer Glove-Box 0,2 g des Katalysators eingewogen. Der Reaktor wurde in einen Thermoblock eingesetzt, die Gaszuleitung und die Abgasleitung angeschlossen und der Thermoblock auf 40°C beheizt. Für die Polymerisation wurde mit Hilfe eines Vibrators die Schüttung aufgewirbelt und der Katalysator bei Normaldruck von unten über Massenflußregler mit einer Mischung aus 30 mL/min Butadien und 10 mL/min Helium angeströmt. Nach 20 Minuten wurde die Reaktion abgebrochen und das entstandene Polymer ausgewogen.

**Ergebnis:**

Die erzielten Aktivitäten sind in unten stehender Tabelle aufgeführt: Die erfindungsgemäßen Katalysatoren 1 - 5 weisen gegenüber den Vergleichsbeispielen deutlich verbesserte Aktivitäten auf.

| Beispiel-Nr. | Katalysator aus Beispiel-Nr. | Aktivität [kg/h (Mol Nd)] |
|---|---|---|
| 6 | Vergleichsbeispiel A | 27,1 |
| 7 | Vergleichsbeispiel B | 28,8 |
| 8 | Vergleichsbeispiel C | 23,5 |
| 9 | 1 | 42,5 |
| 10 | 2 | 54,2 |
| 11 | 3 | 51,5 |
| 12 | 4 | 39,8, |
| 13 | 5 | 55,1 |

## Patentansprüche

1. Trägerkatalysatoren bestehend aus

A)

einem Alkoholat der Seltenen Erden (I),
einem Carboxylat der Seltenen Erden (II),
einer Komplexverbindung der Seltenen Erden mit Dicarbonylverbindungen (III) und/oder
einer Additionsverbindung der Halogenide der Seltenen Erden mit einer Sauerstoff- oder Stickstoff-Donatorverbindung (IV) folgender Formeln:

$$(R^1O)_3M \qquad (I),$$

$$(R^1\text{-}CO_2)_3M \qquad (II),$$

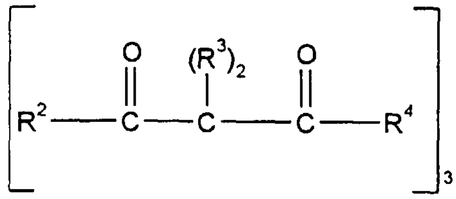

(III)

und

$$MX_3 \cdot y \text{ Donator} \qquad (IV),$$

B) einem Aluminiumtrialkyl, einem Dialkylaluminiumhydrid und/oder einem Alumoxan der Formeln (V) bis (VIII)

$$AlR^5{}_3 \qquad (V),$$

$$HAlR^5{}_2 \qquad (VI),$$

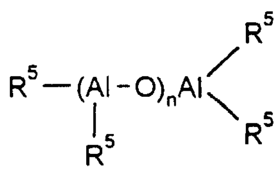

(VII)

und

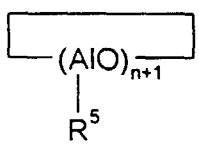

(VIII),

wobei in den Formeln

| | |
|---|---|
| M | ein dreiwertiges Element der Seltenen Erden mit den Ordnungszahlen 57 bis 71 bedeutet, |
| $R^1$, $R^2$, $R^5$ | gleich oder verschieden sind und geradkettige oder verzweigte Alkylreste mit 1 bis 20 C-Atomen, Cycloalkylreste mit 3 bis 20 C-Atomen oder Arylreste mit 6 bis 20 C-Atomen bedeuten, |
| $R^3$ | die Bedeutung von $R^1$, $R^2$ und $R^5$ besitzt oder Wasserstoff ist, |
| $R^4$ | die Bedeutung von $R^1$, $R^2$ und $R^5$ besitzt oder für $OR^1$ oder $NR^1{}_2$ steht oder |
| $R^2$, $R^3$ und $R^4$ | in der Formel (III) Teil eines aliphatischen oder aromatischen Ringsystems mit 3 bis 20 C-Atomen sind, |
| X | für Chlor, Brom oder Iod steht, |

y 1 bis 6 bedeutet,

n 1 bis 50 bedeutet,

C) einer weiteren Lewis-Säure und

D) einer Aktivkohle mit einer spezifischen Oberfläche nach BET von mehr als 100 $m^2/g$, einer Teilchengröße von 0,1 bis 400 µm sowie einem Hg-Porenvolumen von 0,3 bis 3 ml/g und einem Aschegehalt von 0 bis 20 %, und gegebenenfalls

E) ein konjugiertes Dien.

**2.** Katalysator gemäß Anspruch 1, dadurch gekennzeichnet, daß das Molverhältnis der Komponente A zu Komponente B 1:1 bis 1:1 000 beträgt.

**3.** Katalysator gemäß Ansprüchen 1 und 2, dadurch gekennzeichnet, daß das Molverhältnis der Komponente A zu Komponente C 1:0,4 bis 1:15 beträgt.

**4.** Katalysator gemäß Ansprüchen 1 bis 3, dadurch gekennzeichnet, daß die Komponente E in Mengen von 1-1 000 Mol, bezogen auf 1 Mol der Komponente A, eingesetzt wird.

**5.** Katalysator gemäß Ansprüchen 1 bis 4, dadurch gekennzeichnet, daß die Komponente A in Mengen von 0,1 mMol bis 1 Mol, bezogen auf 100 g der Komponente D, eingesetzt wird.

**6.** Verfahren zur Herstellung eines Katalysators gemäß Ansprüchen 1 bis 5, dadurch gekennzeichnet, daß man die Komponenten A bis D des in Anspruch 1 beschriebenen Katalysators in einem inerten, organischen Lösungs- und/oder Verdünnungsmittel bei Temperaturen von -20 bis 80°C in beliebiger Reihenfolge mischt, und anschließend das eingesetzte Lösungs- und/oder Verdünnungsmittel in geeigneter Weise abtrennt.

**7.** Verwendung der Trägerkatalysatoren gemäß Anspruch 1 zur Polymerisation von konjugierten Diene in der Gasphase.

## Claims

**1.** Supported catalysts consisting of

A)

a rare earth alkoxide (I),
a rare earth carboxylate (II),
a rare earth coordination compound with dicarbonyl compounds (III) and/or
an addition compound of rare earth halides with an oxygen or nitrogen donor compound (IV) of the following formulae:

$$(R^1O)_3M \quad \text{(I)},$$

$$(R^1\text{-}CO_2)_3M \quad \text{(II)},$$

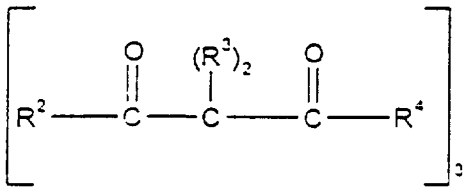

(III)

and

$$MX_3 \cdot y \text{ donor} \quad (IV),$$

B) an aluminiumtrialkyl, a dialkylaluminium hydride and/or an alumoxane of the formulae (V) to (VIII)

$$AlR^5_3 \quad (V),$$

$$HAlR^5_2 \quad (VI),$$

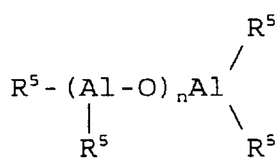

(VII)

and

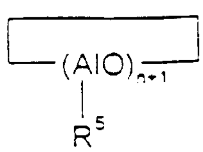

(VIII)

wherein, in the formulae,

M means a trivalent rare earth element with an atomic number of 57 to 71,

$R^1$, $R^2$, $R^5$ are identical or different and mean linear or branched alkyl residues with 1 to 20 C atoms, cycloalkyl residues with 3 to 20 C atoms or aryl residues with 6 to 20 C atoms,

$R^3$ has the meaning of $R^1$, $R^2$ and $R^5$ or is hydrogen,

$R^4$ has the meaning of $R^1$, $R^2$ and $R^5$ or denotes $OR^1$ cr $NR^1_2$ or

$R^2$, $R^3$ and $R^4$ in the formula (III) are part of an aliphatic or aromatic ring system with 3 to 20 C atoms,

X denotes chlorine, bromine or iodine,

y means 1 to 6,

n means 1 to 50,

C) a further Lewis acid and

D) an activated carbon with a BET specific surface area of greater than 100 $m^2/g$, a particle size of 0.1 to 400 µm together with an Hg pore volume of 0.3 to 3 ml/g and an ash content of 0 to 20% and optionally

E) a conjugated diene.

**2.** Catalyst according to claim 1, characterised in that the molar ratio of component A to component B is 1:1 to 1:1000.

**3.** Catalyst according to claims 1 and 2, characterised in that the molar ratio of component A to component C is 1: 0.4 to 1:15.

**4.** Catalyst according to claims 1 to 3, characterised in that component E is used in quantities of 1-1000 mol relative to 1 mol of component A.

**5.** Catalyst according to claims 1 to 4, characterised in that component A is used in quantities of 0.1 mmol to 1 mol relative to 100 g of component D.

**6.** Process for the production of a catalyst according to claims 1 to 5, characterised in that components A to D of the catalyst described in claim 1 are mixed in any desired sequence in an inert, organic solvent and/or diluent at temperatures of -20 to 80°C and the solvent and/or diluent used is then separated in a suitable manner.

**7.** Use of the supported catalysts according to claim i for the polymerisation of conjugated dienes in the gas phase.

## Revendications

**1.** Catalyseurs sur support consistant en

A)

un alcoolate des terres rares (I),
un carboxylate des terres rares (II),
un complexe des terres rares et de dérivés dicarbonylés (III) et/ou un composé d'addition des halogénures des terres rares et d'un composé donateur d'oxygène ou d'azote (IV) aux formules suivantes :

$$(R^10)_3M \quad (I),$$

$$(R^1\text{-}C0_2)_3M \quad (II),$$

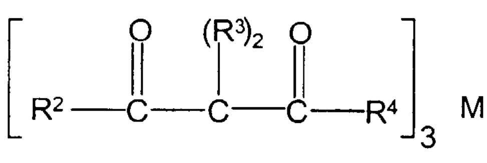

(III)

et

$$MX_3.y \text{ donateur} \quad (IV),$$

B) un trialkylaluminium, un hydrure de dialkylaluminium et/ou un alumonaxe, de formules V à VIII :

$$AlR^5_3 \qquad (V),$$

$$HAlR^5_2 \qquad (VI),$$

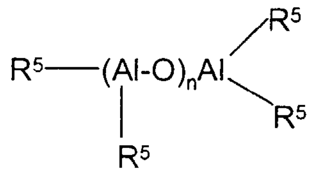

(VII)

et

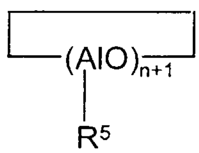

(VIII),

les symboles de ces formules ayant les significations suivantes :

| | |
|---|---|
| M | représente un élément trivalent des terres rares, de numéro atomique 57 à 71, |
| $R^1$, $R^2$, $R^5$, | ayant des significations identiques ou différentes, représentent des groupes alkyle à chaîne droite en $C_1$-$C_{20}$, cycloalkyle en $C_3$-$C_{20}$ ou aryle en $C_6$-$C_{20}$, |
| $R^3$ | a les significations de $R^1$, $R^2$ et $R^5$ ou représente l'hydrogène, |
| $R^4$ | a les signification de $R^1$, $R^2$, $R^5$ ou représente $OR^1$ ou $NR^1_2$, ou bien |
| $R^2$, $R^3$ et $R^4$, | dans la formule III, forment une partie d'un système cyclique aliphatique ou aromatique en $C_3$-$C_{20}$, |
| X | représente le chlore, le brome ou l'iode, |
| y | est un nombre allant de 1 à 6, |
| n | est un nombre allant de 1 à 50, |

C) un autre acide de Lewis et

D) un charbon actif ayant une surface spécifique BET supérieure à 100 $m^2/g$, une dimension de particule de 0,1 à 400 µm et un volume de pores au mercure de 0,3 à 3 ml/g avec une teneur en cendres de 0 à 20 %, et le cas échéant,

E) un diène conjugué.

**2.** Catalyseur selon la revendications 1, caractérisé en ce que le rapport molaire du composant A au composant B va de 1:1 à 1:1000.

**3.** Catalyseur selon les revendications 1 et 2, caractérisé en ce que le rapport molaire du composant A au composant C va de 1:0,4 à 1:15.

**4.** Catalyseur selon les revendications 1 à 3, caractérisé en ce que le composant E est mis en oeuvre en quantité de 1 à 1 000 mol pour 1 mol du composant A.

**5.** Catalyseur selon les revendications 1 à 4, caractérisé en ce que le composant A est mis en oeuvre en quantité de 0,1 mmol à 1 mol pour 100 g du composant D.

**6.** Procédé de préparation d'un catalyseur selon les revendications 1 à 5, caractérisé en ce que l'on mélange dans un ordre quelconque les composants A à D du catalyseur selon la revendication 1, dans un solvant et/ou diluant

organique inerte à des températures allant de -20 à +80°C, puis on sépare de manière appropriée le solvant et/ou diluant mis en oeuvre.

**7.** Utilisation des catalyseurs sur support selon la revendication 1, pour la polymérisation de diènes conjugués en phase gazeuse.